# EUROPÄISCHE PATENTSCHRIFT

(11) **EP 1 386 812 B1**
(45) Veröffentlichungstag und Bekanntmachung des Hinweises auf die Patenterteilung: **15.09.2010**
(21) Anmeldenummer: 03016546.8
(22) Anmeldetag: 24.07.2003
(51) Int. Cl.: B60T 17/08

(54) **Federspeicherzylinder Für Fahrzeugbremsen**
Spring brake cylinder for vehicle brakes
Cylindre de frein à ressort pour véhicules routiers

(30) Priorität: 26.07.2002 DE 10234196
(43) Veröffentlichungstag der Anmeldung: 04.02.2004
(73) Patentinhaber: KNORR-BREMSE Systeme für Schienenfahrzeuge GmbH, 80809 München (DE)
(72) Erfinder: Fuderer, Erich, 82256 Fürstenfeldbruck (DE); Wolfsteiner, Peter Dr., 80797 München (DE); Kerscher, Albert, 85386 Eching (DE)

(56) Entgegenhaltungen:
- EP-A- 0 457 030
- DE-A- 10 020 350

## Beschreibung

Die vorliegende Erfindung betrifft einen Federspeicherzylinder für Fahrzeugbremsen, insbesondere für Schienenfahrzeugbremsen nach dem Oberbegriff des Anspruches 1.

Es sind Federspeicherzylinder für Fahrzeugbremsen bekannt, bei denen die Bremse über eine Kolbenstange betätigbar ist, die wiederum über einen Federspeicherkolben bewegbar ist. Auf der einen Seite des Federspeicherkolbens ist eine Federspeicherfeder zur Vorspannung in Bremsrichtung vorgesehen, während auf der gegenüberliegenden Seite des Federspeicherkolbens ein Druckraum vorgesehen ist, der der Kraft der Federspeicherfeder entgegenwirkt. Bei einem solchen Typ einer sogenannten passiven Bremse baut sich die Bremskraft auf, wenn über eine Entlüftung der Druck vermindert wird, wobei eine solche passive Bremse meist mit einer aktiven Betriebsbremse gekoppelt ist.

Für passive Bremsen ist beispielsweise aus der DE-AS 26 08 502 eine Notlösevorrichtung bekannt, damit die Bremse manuell gelöst werden kann, um die Fahrtauglichkeit herzustellen, auch wenn aus irgendwelchen Gründen kein Druckaufbau zur Betätigung des Federspeicherkolbens mehr erfolgen kann. Die Notlösevorrichtung umfasst eine mit einer Kolbenstange verbundene Spindel, die über ein nicht selbst hemmendes Gewinde mit einem festlegbaren Spindeltriebelement verbunden ist. Wenn das Spindeltriebelement für eine Drehung freigegeben wird, ist der Kraftfluss zwischen dem am Spindeltriebelement festgelegten Federspeicherkolben und der in Löserichtung vorgespannten Kolbenstange unterbrochen, so dass die Bremse in die gelöste Position bewegt wird. Bei diesem Typ eines Federspeicherzylinders besteht allerdings die Gefahr, dass im Fall eines Schlauchbruches während der Fahrt die Federspeicherbremse anliegt und so eine ungewollte Bremsung auslösen kann.

Eine Weiterentwicklung einer Federspeicherbremse ist in der DE 40 15 477 A1 bzw. (EP 0 457 030 A1) gezeigt, bei der in einem Federspeicherzylinder für druckluftbetätigte Fahrzeugbremsen ein schneller Druckabfall erfasst werden kann, und ein Einfallen des Federspeichers vermeidet. Hierfür ist in dem Druckraum ein Sperrkolben vorgesehen, in dem eine Düse ausgespart ist. Mittels des Sperrkolbens kann die Größe des Druckabfalles durch den Differenzdruck an der Düse bestimmt werden. Überschreitet der Differenzdruck einen bestimmten Schwellwert, deutet dies auf einen schnellen Druckabfall und auf einen Schlauchbruch hin, während ein langsamer Druckabfall auf ein gewolltes Einlegen der Federspeicherbremse hinweist. Um bei einem schnellen durch einen Schlauchbruch verursachten Druckabfall ein Auslösen der Bremse zu vermeiden, wird eine Verriegelung betätigt, die den Federspeicherkolben in einer gelösten Stellung blockiert, um ein Einfallen der Federspeicherbremse zu vermeiden. Die gezeigte Konstruktion ist jedoch relativ aufwendig, da der Sperrkolben innerhalb des Druckraumes montiert werden muss und bei einer Fehlfünktion ein vollständiger Ausbau des Federspeicherkolbens erfolgen muss. Diese Konstruktion ist daher vergleichsweise kompliziert.

Ferner gibt es die Möglichkeit, einen Schlauchbruch und einen dadurch entstehenden schnellen Druckabfall über ein Ventil zu erfassen, das dann über weitere Betätigungsmittel ein mechanisches Notlösen der Federspeicherbremse auslöst, damit ein Einfallen verhindert wird (DE-A-27 45 231). Auch das Vorsehen von zusätzlichen Ventilen ist relativ aufwendig und für Fehlfunktionen anfällig.

Ferner ist aus der gattungsbildenden DE 100 39 161 A1 ein Federspeicherzylinder bekannt, mit einem Gehäuse, in dem eine Federspeicherfeder auf einen Federspeicherkolben wirkt, und einer rein manuell entriegelbaren Notlösevorrichtung zum Unterbrechen des Kraftflusses zwischen Federspeicherkolben und Kolbenstange. Die Notlösevorrichtung umfasst einen Handgriff zur Betätigung, der über mechanische Übertragungsglieder mit der Notlösevorrichtung verbunden ist. Ein Sicherung gegen Schlauchbruch ist für den Federspeicherzylinder jedoch nicht offenbart.

Es ist daher Aufgabe der vorliegenden Erfindung, einen Federspeicherzylinder für Fahrzeugbremsen der eingangs genannten Art zu schaffen, der mit einfachen Mitteln einen Schlauchbruch und einen daraus resultierenden rapiden Druckabfall zuverlässig erfasst und ein Einfallen der Federspeicherbremse vermeidet.

Diese Aufgabe wird mit einem Federspeicherzylinder für Fahrzeugbremsen mit den Merkmalen des Anspruches 1 gelöst.

Wenn erfindungsgemäß die manuell entriegelbare Notlösevorrichtung auch mittels eines bewegbaren Betätigungsgliedes auslösbar ist, mit dem ein Übersteigen eines gewissen Druckabfalles erfassbar ist, kann die Funktion des Notlösens und die Bereitstellung einer Schlauchsicherung miteinander kombiniert werden, um mit nur wenigen Bauteilen ein sicheres Funktionieren des Federspeicherzylinders zu gewährleisten, auch wenn ein Schlauchbruch auftreten sollte. Gemäß der Erfindung wird dabei die Notlösevorrichtung direkt mittels des bewegbaren Betätigungsgliedes geschaltet, so dass auf zusätzliche Verriegelungseinrichtungen, Ventile oder andere Bauteile verzichtet werden kann. Dies führt zu einem vereinfachten und damit kostengünstigeren Aufbau des Federspeicherzylinders.

Gemäß einer bevorzugten Ausführungsform der Erfindung ist das Betätigungsglied in einem mit dem Druckanschluss verbundenen Strömungskanal angeordnet. Die unmittelbare Erfassung eines starken Druckgefälles erfolgt dabei vorzugsweise über ein Kolbenelement oder einen Membrankolben, in dem mindestens eine Öffnung zur Durchleitung eines Fluides vorgesehen ist. Bei einer gewollten Betätigung des Federspeicherkolbens wird in dem zugehörigen Druckraum langsam Druck aufgebaut oder über Entlüftung der Druck abgebaut. Das Fluid strömt dann durch die mindestens eine Öffnung am Kolbenelement, wobei die Öffnung als eine Art Düse wirkt. Sobald der Druckabfall einen Wert annimmt, der nicht mehr durch einen normalen Betätigungsvorgang zu erklären ist und auf einen Schlauchbruch hindeutet, entsteht am Kolbenelement ein Druckgefälle, da das Fluid nicht mehr mit der erforderlichen Geschwindigkeit durch die Öffnung abströmen kann. Dieses Druckgefälle kann dann zur Auslösung der Notlösevorrichtung eingesetzt werden. Das Kolbenelement ist dabei geschützt aufgenommen, so dass keine Verunreinigungen an das Kolbenelement gelangen, die die Funktionsfähigkeit beeinträchtigen könnten.

Statt eine Öffnung in dem Kolbenelement vorzusehen, kann parallel zu dem Kolbenelement ein mit einer düsenförmigen Öffnung versehener Strömungskanal vorgesehen sein. Dann ist das Kolbenelement parallel zu dem Strömungskanal geschaltet, wobei bei einem starken Druckabfall an der Leitung zu dem Druckanschluß am Kolbenelement ein Druckgefälle entsteht, dass zur Betätigung der Notlösevorrichtung eingesetzt werden kann.

Für eine einfache Betätigung der Notlösevorrichtung ist das Kolbenelement vorzugsweise mit einem Stift verbunden, der zur Verriegelung der Notlösevorrichtung in ein Zahnrad eingreift. Der Stift kann zusätzlich in einer das Zahnrad entriegelnden Position arretiert werden. Dies hat den Vorteil, dass bei einer Betätigung der Notlösevorrichtung der Stift das Zahnrad für die benötigte Zeitdauer vollkommen freigibt, um den Notlösevorgang durchzuführen. Nach der kurzen einmaligen Betätigung, beispielsweise durch die am Kolbenelement anliegende Druckdifferenz, können die einzelnen Bauelemente für den Notlösevorgang bewegt werden, wobei die Ausströmdauer der Restluft im Federspeicherzylinder, die Trägheit der einzelnen Bauelemente bedingt durch Temperaturunterschiede und die Viskosität der Schmierstoffe und sonstiger Fluide sich nicht nachteilig auf den Notlösevorgang auswirkt. Durch ein Arretieren des Stiftes in der entriegelnden Position wird das Zahnrad für die benötigte Lösezeit freigegeben.

Vorzugsweise ist die Arretierung des Stiftes in der entriegelten Position über eine Bewegung des Federspeicherkolbens in eine die Bremse lösende Endstellung lösbar. Wenn der Federspeicherkolben nach einer Beaufschlagung mit Druckluft wieder in die lösende Endstellung gebracht wird, kann die Notlösevorrichtung so wieder entriegelt werden, ohne dass eine manuelle Freigabe der Notlösevorrichtung erforderlich ist. Eine mechanisch einfache Entriegelungsvorrichtung wird dabei durch ein Verriegelungselement gebildet, das in eine Aussparung des Stiftes eingreift. Es können auch andere Mechaniken zum Lösen der Notlöseeinrichtung eingesetzt werden.

Gemäß einer bevorzugten Ausführungsform ist das Kolbenelement mittels einer Feder zu der Seite hin vorgespannt, aus der sich der Druckanschluss für den Federspeicherkolben befindet. Das Kolbenelement soll nur bei Übersteigen eines vorgegebenen Druckabfalles ausgelöst werden, wobei über die Federkraft der Zeitpunkt der Auslösung eingestellt werden kann.

Vorzugsweise ist die Leitung von dem Druckanschluss am Federspeicherzylinder zu dem Gehäuse, in dem das Betätigungsglied geführt ist, geschützt angeordnet oder als Metallrohr ausgebildet. Wenn in diesem Abschnitt eine besonders zuverlässige Leitung des Fluids gewährleistet ist, wird eine Fehlfunktion sicher vermieden.

Die Erfindung wird nachfolgend anhand von Ausführungsbeispielen mit Bezug auf die beigefügten Zeichnungen näher erläutert. Es zeigen:
- Fig. 1: eine geschnittene Ansicht eines Ausführungsbeispiels eines erfindungsgemäßen Federspeicherzylinders in gelöster Stellung;
- Fig. 2: einen Schnitt entlang der Linie A der Fig. 1;
- Fig. 3: eine geschnittene Ansicht des Federspeicherzylinders der Fig. 1 in einer bremsenden Position;
- Fig. 4: eine geschnittene Ansicht des Federspeicherzylinders der Fig. 1 mit geöffneter Notlösevorrichtung;
- Fig. 5: eine geschnittene Ansicht entlang der Linie A des Federspeicherzylinders der Fig. 4;
- Fig. 6: eine geschnittene Ansicht eines zweiten Ausführungsbeispiels eines erfindungsgemäßen Federspeicherzylinders;
- Fig. 7: eine Detailansicht eines modifizierten Zahnrades bei einem erfindungsgemäßen Federspeicherzylinder, und
- Fig. 8: eine geschnittene Seitenansicht einer weiteren Ausführungsform eines Federspeicherzylinders.

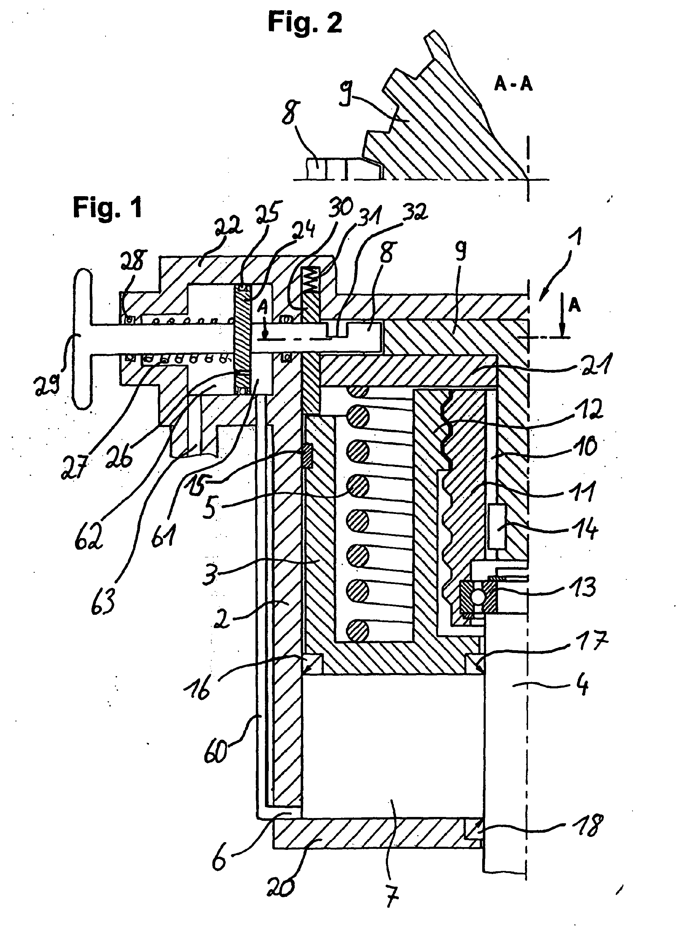

In Fig. 1 ist ein Federspeicherzylinder 1 im Schnitt dargestellt, wobei zur Vereinfachung nur der relevante Abschnitt bis zur Mitte des Federspeicherzylinders 1 gezeigt ist. Der Federspeicherzylinder 1 umfasst ein Gehäuse 2, in dem ein Federspeicherkolben 3 verschiebbar geführt ist. Der Federspeicherkolben 3 ist über eine Federspeicherfeder 5 zu einem Druckraum 7 hin vorgespannt. Der Druckraum 7 ist über einen Druckanschluss 6 mit Druck beaufschlagbar bzw. entlüftbar. Bei einem Entlüften des Druckraumes 7 verschiebt sich der Federspeicherkolben 3 aufgrund der Kraft der Federspeicherfeder 5 nach unten.

An dem Federspeicherkolben 3 ist ein Gewindeabschnitt 12 ausgebildet, der mit einem nicht selbst hemmend ausgebildeten Gewinde einer Spindel 11 kämmt. Die Spindel 11 ist über ein Kugellager 13 mit einer Kolbenstange 4 verbunden, mit der eine nicht dargestellte Bremse betätigbar ist.

Auf der Verlängerung der Achse der Kolbenstange 4 ist ein Zahnrad 9 angeordnet, an dem eine Paßfeder 14 festgelegt ist, die in eine Nut 10 in der Spindel 11 eingreift. Das Zahnrad 9 und somit die Spindel 11 sind dabei über einen Stift 8 arretiert gehalten (Fig. 2).

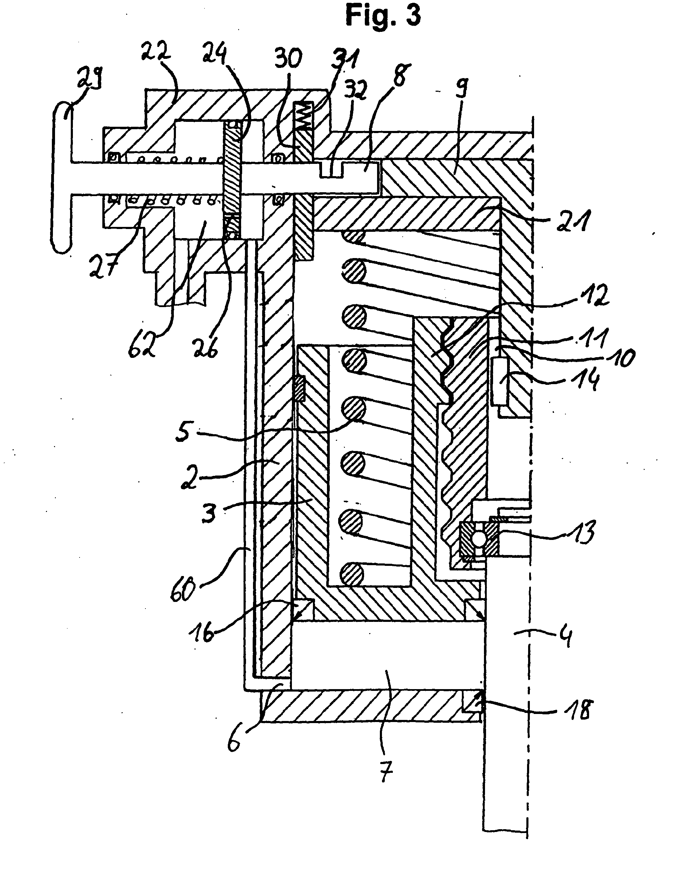

Bei einer Entlüftung des Druckraumes 7 über den Druckanschluss bewegt sich der Federspeicherkolben 3 nach unten, wobei eine Führung des Federspeicherkolbens 3 über ein Gleitband 15 sowie eine Dichtung 16 gewährleistet ist. Durch die drehfeste Verriegelung der Spindel 11 wird die Axialkraft von dem Federspeicherkolben 3 auf die Spindel 11, das Kugellager 13 auf die Kolbenstange 4 übertragen, so dass diese eine Bremse betätigen kann. Die Kolbenstange 4 ist dabei durch das Gehäuse 2 abgedichtet über eine Dichtung 18 durch ein Gehäuseteil 20 geführt. Das Zahnrad 9 ist über eine Zwischenwand 21 des Gehäuses axial unverschiebbar gehalten. Eine mögliche Bremsstellung des Federspeicherzylinders 1 ist in Fig. 3 dargestellt.

Ferner umfasst der Federspeicherzylinder 1 eine Notlösevorrichtung, die ein Gehäuse 22 aufweist, in dem ein Kolbenelement 24 aufgenommen ist. Das Kolbenelement 24 ist über eine Dichtung 25 abgedichtet in dem Gehäuse 22 geführt. In dem Kolbenelement 24 ist mindestens eine Öffnung 26 nach Art einer Düse ausgebildet, die im Verhältnis zur Fläche des Kolbenelementes 24 nur einen geringen Durchmesser aufweist. Der Düsendurchmesser ist so ausgeführt, dass bei einer schnellen Entlüftung eine merkliche Druckdifferenz am Kolbenelement 24 entsteht. Das Kolbenelement 24 ist über eine Feder 27 zu dem Zahnrad 9 hin vorgespannt, wobei das Kolbenelement 24 an dem Stift 8 festgelegt ist. Der Stift 8 tritt über eine Dichtung 28 abgedichtet aus dem Gehäuse 22 heraus und weist einen Griff 29 zur manuellen Betätigung auf. Der schematisch dargestellte Griff 29 kann dabei auch vom Kolbenelement 24 entkoppelt sein, beispielsweise kann der Griff 29 entfernt angeordnet über einen Bowdenzug das Kolbenelement 24 betätigen. Durch die manuelle Betätigung kann ein gewolltes Notlösen der Bremse erfolgen. Ferner kann am Federspeicherzylinder oder entfernt davon eine elektrische, mechanische oder optische Anzeige für den Betriebszustand des Federspeicherzylinders vorgesehen sein.

In dem Gehäuse 22 ist ein Raum 61 ausgebildet, der über eine beispielsweise als Metallrohr ausgebildete Leitung 60 mit dem Anschluss 6 für den Raum 7 des Federspeicherzylinders 1 verbunden ist. Auf der gegenüberliegenden Seite des Kolbenelements 24 ist ein Raum 62 ausgebildet, der über einen Anschluss 63 mit einem nicht näher dargestellten Schlauchsystem des Fahrzeugs verbunden ist. Für eine Betätigung der Bremse wird über den Anschluss 63 entlüftet, wobei das unter Druck stehende Fluid, vorzugsweise Luft, durch die Öffnung 26 in dem Kolbenelement 24 strömen kann, ohne dass sich ein erheblicher Druckunterschied beidseits des Kolbenelementes 24 ausbildet. Eine Bewegung des Kolbenelementes 24 und somit des Stiftes 8 wird somit vermieden.

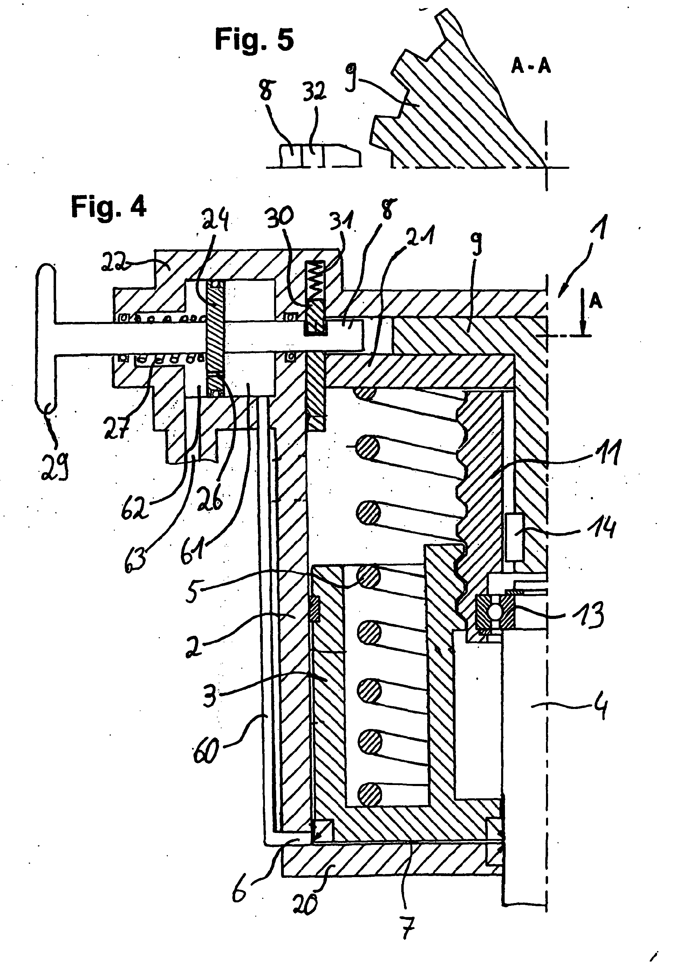

Im Falle eines Schlauchbruches am Anschluss 63 oder bei einer manuellen Betätigung der Notlösevorrichtung über den Griff 29 wird die in den Fig. 4 und 5 gezeigte Position erreicht. Im Falle eines Schlauchbruches tritt eine schlagartige Entlüftung am Anschluss 63 auf, die für eine erhebliche Druckdifferenz zwischen dem Raum 62 und dem Raum 61 sorgt. Durch die düsenartige Öffnung 26 kann nur begrenzt das unter Druck stehende Fluid durchströmen, so dass die Druckdifferenz nicht kurzfristig ausgeglichen wird. Durch die entstehende Druckkraft auf das Kolbenelement 24 bewegt sich dieses in dem Gehäuse 22 nach links gegen die Kraft der Feder 27. Dadurch wird der Stift 8 aus dem Zahnrad 9 gezogen und gibt dieses zur Drehbewegung frei. Der Stift 8 weist dabei eine Ausnehmung 32 auf, in die ein Verriegelungselement 30 einfügbar ist. Das Verriegelungselement 30 ist in dem Gehäuse 2 aufgenommen und drückt aufgrund einer Vorspannung durch eine Feder 31 in die Ausnehmung 32 des Stiftes 8 hinein. Nach dem Einrasten des Verriegelungselements 30 ist der Stift 8 in der zurückgezogenen Position arretiert.

Durch Freigeben des Zahnrades 9 kann sich dieses aufgrund der Kopplung über die Passfeder 14 mit der Spindel 11 drehen. Dadurch wird der Kraftfluss zwischen Federspeicherkolben 3 und Kolbenstangen 4 unterbrochen, wobei der Federspeicherkolben 3 aufgrund der Kraft der Federspeicherfeder 5 auf die Gehäusewand 20 gedrückt wird. Demgegenüber wird die Kolbenstange 4 aufgrund der Kraft einer nicht dargestellten Rückholfeder in entgegengesetzte Richtung gedrückt, bis die Spindel 11 an der Gehäusewand 21 anliegt. Die Bremse befindet sich dann in der gelösten Position.

Nachdem der Defekt am Druckschlauch behoben wurde und somit eine Wiederbefüllung mit Druck möglich ist, bewegt sich der Federspeicherkolben 3 aufgrund des neu anliegenden Druckes im Raum 7 in die Ausgangsposition zurück. Kurz bevor er die Endstellung erreicht, liegt er an der Stirnkante des Verriegelungselementes 30 an und drückt dieses gegen die Kraft der Feder 31 aus der Aussparung 32 des Stiftes 8 heraus. Nachdem der Stift 8 freigegeben wurde, drückt die Feder 27 das Kolbenelement 24 zusammen mit dem Stift 8 wieder in die verriegelte Position zwischen zwei Zähne des Zahnrades 9, da keine wesentliche Druckdifferenz mehr zwischen beiden Seiten des Kolbenelementes 24 vorhanden ist.

Für eine Schnellbelüftung des Raums 7 in dem Federspeicherzylinder kann ein Ventil und eine Zuführung zu dem Raum 7 vorgesehen sein. Ferner ist es möglich, am Kolbenelement 24 einen nur einseitig abdichtenden Dichtring vorzusehen, wie dies beispielsweise in der EP 457 030 A1 mit Bezug auf die Kolbendichtung gezeigt ist.

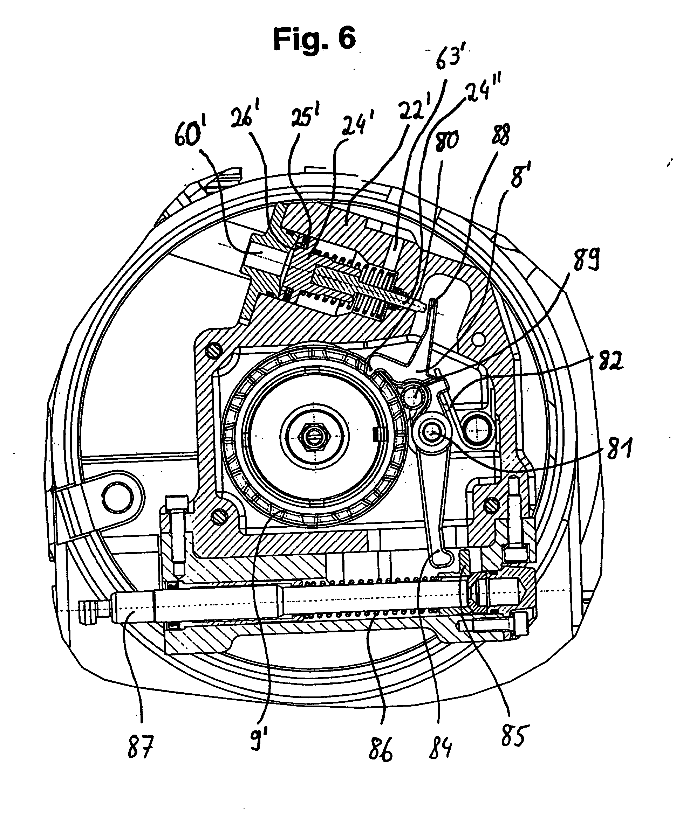

In Fig. 6 ist ein zweites Auführungsbeispiel eines Federspeicherzylinders gezeigt, bei dem die Notlösevorrichtung statt eines Stiftes und eines Verriegelungselementes ein Zahnrad 9' aufweist an dem eine Sperrklinke 8' angreift. Die Sperrklinke 8' greift mit einer Klinke 80 in das Zahnrad 9' ein und arretiert dieses gegen die Vorspannung einer Federkraft. Die Sperrklinke 8' ist dabei um eine Achse 81 drehbar gelagert und über eine Klinkenfeder 82 gegen das Zahnrad 9' gedrückt gehalten. Das Zahnrad 9' kann wie bei dem vorangegangenen Ausführungsbeispiel mit einer Kolbenstange 4 in einem Druckraum 7 oder einer anderen Mechanik gekoppelt sein.

Zum Entriegeln der Sperrklinke 8' ist benachbart zu einem Hebelabschnitt 84 der Sperrklinke 8' ein Mitnehmer 85 vorgesehen, der über eine Druckfeder 86 vorgespannt ist. Der Mitnehmer 85 kann über eine Betätigungsstange 87 gegen die Kraft der Druckfeder 86 bewegt werden, um die Sperrklinke 8' um die Achse 81 zu drehen und das Zahnrad 9' zu entriegeln. In der entriegelten Position ist die Sperrklinke 8' über einen Riegel 89 arretierbar. Weitere Details des Klinkenmechanismusses sind in der deutschen Patentanmeldung 100 20 350.8 offenbart.

Um zu vermeiden, dass bei einem Schlauchbruch die Feststellbremse versehentlich betätigt wird, ist wie bei dem ersten Ausführungsbeispiel eine Schlauchbruchsicherung in Form eines über eine Druckdifferenz bewegbaren Kolbenelementes vorgesehen, welches die Sperrklinke 8' entriegeln kann. Das Kolbenelement kann dabei in Verlängerung der Betätigungsstange 87 vorgesehen sein, wobei die Betätigungsstange 87 sowohl manuell als auch über das Kolbenelement bewegt werden kann.

Wie in Fig. 6 gezeigt ist, kann ein Kolbenelement 24 auch getrennt von der manuell bewegbaren Betätigungsstange 87 angeordnet sein, und beispielsweise auf einen Abschnitt 88 an der Sperrklinke 8' einwirken, um diese von dem Zahnrad 9' zu entkoppeln. Die manuelle Betätigungsmechanik und die Mechanik für die Schlauchbruchsicherung sind somit weitgehend getrennt voneinander angeordnet. Das Kolbenelement 24' ist in einem Gehäuse 22' geführt, wobei am Umfang des Kolbenelementes 24' eine Dichtung 25' vorgesehen ist. Benachbart zu der Dichtung 25' sind Öffnungen 26' oder ein Öffnungsring vorgesehen, durch die bei einer Druckdifferenz zwischen einer Leitung 60' auf der einen Seite des Kolbenelementes 24' und einem Anschluss 63' auf der anderen Seite des Kolbenelementes 24' ein langsames Abströmen eines Fluides ermöglicht. Bei einem schlagartigem Druckabfall, z. B. infolge eines Schlauchbruches, wird das Kolbenelement 24' zusammen mit einem mit dem Kolbenelement verbundenen Stiftelement 24" bewegt. Das Stiftelement 24" ist abgedichtet durch das Gehäuse 22' Befährt und drückt dann gegen den Abschnitt 88 der Sperrklinke 8' um diese zu entriegeln.

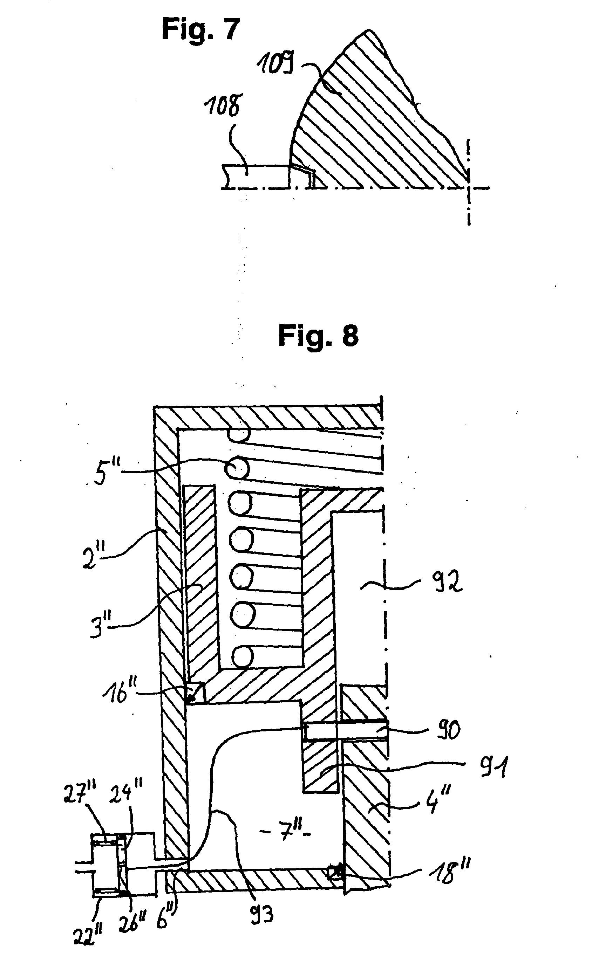

In Fig. 7 ist eine weitere Ausführungsform der Erfindung gezeigt, die gegenüber der Ausführungsform der Fig. 1 bis 5 hinsichtlich des Zahnrades 9 modifiziert ist. Das gezeigte Zahnrad 109 weist lediglich eine Aussparung auf, in die ein Stift 108 einfügbar ist, um das Zahnrad 109 drehfest zu arretieren. Sobald der Stift 108 über die oben beschriebene Notlöseeinrichtung aus der Aussparung des Zahnrades 109 gezogen wird, unterbricht der Kraftfluß zwischen Federspeicherkolben 3 und Kolbenstange 4. Da der unter Vorspannung stehende Stift 108 nicht mehr in eine benachbarte Aussparung an dem Zahnrad 109 eingreifen kann, gleitet der Stift 108 an dem glatten Umfang des Zahnrades 109 und verhindert, dass der Kraftfluß zwischen Federspeicherkolben 3 und Kolbenstange 4 wiederhergestellt wird, wenn die Druckdifferenz beidseitig des Kolbenelementes 24 schon wieder unter den Auslösewert abgesunken ist. Durch diese Konstruktion kann das Verriegelungselement 30 zum Verriegeln des Stiftes 8 entfallen, wobei der Drehwinkel kleiner 360° gehalten wird. Weitere Details dieses Typs einer Notlösevorrichtung sind in der DE 100 54 149.6 beschrieben. Der in dieser Druckschrift gezeigte Federspeicherzylinder ist ebenfalls mit einer erfindungsgemäßen Schlauchbruchsicherung kombinierbar.

In Fig. 8 ist eine weitere Ausführungsform eines Federspeicherzylinders gezeigt, bei dem zur Kraftübertragung ein Kolben 3" direkt mit einer Kolbenstange 4" gekoppelt ist und somit keine Spindel vorgesehen ist. In einem Gehäuse 2" ist ein Federspeicherkolben 3" mit einer Dichtung 16" verschiebbar geführt, wobei der Federspeicherkolben 3" über eine Federspeicherfeder 5" zu einem Druckraum 7" hin vorgespannt ist. Der Druckraum 7" ist wie bei den anderen Ausführungsbeispielen über einen Druckanschluss 6" mit Druck beaufschlagbar bzw. entlüftbar. An dem Druckanschluß 6" ist ein zylindrisches Gehäuse 22" angeschlossen, in dem ein Kolbenelement 24" mit einer düsenförmigen Öffnung 26" geführt ist, das über eine Feder 27" vorgespannt ist.

Die Notlösevorrichtung umfasst einen Stift 90, der in eine Öffnung in einem hervorstehenden Abschnitt 91 an dem Federspeicherkolben 3" und in eine Öffnung in der Kolbenstange 4" eingefügt ist. Durch den Stift 90 sind die Kolbenstange 4" und der Federspeicherkolben 3" zueinander nicht verschiebbar. Der Stift 90 ist über ein Koppelelement 93 mit dem Kolbenelement 24" verbunden und wird bei einer Bewegung des Kolbenelementes 24" aus der Öffnung der Kolbenstange 4" herausgezogen, so dass dann der Kraftfluß zwischen Kolbenstange 4" und Federspeicherkolben 3" unterbrochen ist und die Kolbenstange 4" in eine Aussparung 92 in dem Federspeicherkolben 3" einfahren kann. Als Koppelelement 93 sind mechanische Elemente, wie ein Seil oder ein Gestänge, oder auch hydraulische und pneumatische Elemente einsetzbar. Ferner kann für den Stift 90 eine Führung oder eine Schaltmechanik vorgesehen sein.

Bei den vorangegangenen Ausführungsbeispielen ist das Kolbenelement mit einer düsenförmigen Öffnung versehen, um ab einer gewissen Druckdifferenz die Notlöseeinrichtung zu betätigen. Es ist auch möglich, das Kolbenelement zumindest in eine Strömungsrichtung des Fluides abgedichtet auszugestalten und parallel zu dem Kolbenelement eine Leitung vorzusehen, in der eine düsenförmige Öffnung vorgesehen ist. Bei einem starken Druckabfall wirkt somit ebenfalls eine Kraft auf das Kolbenelement zur Betätigung der Notlösevorrichtung.

Um das Kolbenelement, die Leitungen und die mit dem Fluid in Berührung kommenden Bauteile vor Verunreinigungen zu schützen, können bei den gezeigten Ausführungsbeispielen Filter eingebaut werden, mit denen Verunreinigungen aus dem Leitungssystem entfernt werden.

Bei den gezeigten Ausführungsbeispielen wird die Notlöseeinrichtung im Falle eines Schlauchbruches betätigt. Es ist auch möglich, die gezeigte Notlöseeinrichtung für ein gewolltes steuerbares Notlösen einzusetzen.

## Patentansprüche

1. Federspeicherzylinder für Fahrzeugbremsen mit einem in einem Gehäuse (2,2") angeordneten Federspeicherkolben (3, 3"), in dem eine Kolbenstange (4,4") axial verschiebbar ist, mit mindestens einer Federspeicherfeder (5, 5"), die den Federspeicherkolben (3, 3") vorspannt, einem mit einem Druckanschluss (6) verbundenen Raum (7, 7"), der gegen die Kraft der Federspeicherfeder (5, 5") auf den Federspeicherkolben (3, 3") wirkt, und einer manuell entriegelbaren Notlösevörrichtung (8 bis 14; 80; 90) zum Unterbrechen des Kraftflusses zwischen Federspeicherkolben (3, 3") und Kolbenstange (4, 4"), **dadurch gekennzeichnet, dass** die manuell entriegelbare Notlösevorrichtung (8 bis 14; 80; 90) auch mittels eines bewegbaren Betätigungsgliedes (24, 24', 24") auslösbar ist, mit dem ein Übersteigen eines gewissen Druckabfalles an Leitungen (63) zu dem Druckanschluss (6) erfassbar ist.

2. Federspeicherzylinder nach Anspruch 1, **dadurch gekennzeichnet, dass** das Betätigungsglied (24, 24', 24") in einem mit dem Druckanschluss (6) verbundenen Strömungskanal angeordnet ist.

3. Federspeicherzylinder nach Anspruch 1 oder 2, **dadurch gekennzeichnet, dass** das Betätigungsglied (24, 24', 24") ein Kolbenelement umfasst, in dem mindestens eine Öffnung (26, 26', 26") zur Durchleitung eines Fluides vorgesehen ist.

4. Federspeicherzylinder nach Anspruch 1 oder 2, **dadurch gekennzeichnet, dass** das Betätigungsglied ein in einem Zylinder bewegbares Kolbenelement umfasst, und parallel zu dem Kolbenelement ein mit einer düsenförmigen Öffnung versehener Strömungskanal vorgesehen ist.

5. Federspeicherzylinder nach einem der Ansprüche 1 bis 4, **dadurch gekennzeichnet, dass** die Notlösevorrichtung (8 bis 14; 80; 90) in einer ersten Position arretierbar ist, in der ein Kraftfluß zwischen Federspeicherkolben (3, 3") und Kolbenstange (4, 4") hergestellt ist, und in einer zweiten Position arretierbar ist, in der der Kraftfluß zwischen Federspeicherkolben (3, 3") und Kolbenstange (4, 4") unterbrochen ist.

6. Federspeicherzylinder nach einem der Ansprüche 1 bis 5, **dadurch gekennzeichnet, dass** das Kolbenelement (24) mit einem Stift (8) oder einer Sperrklinke (8') verbunden ist, der zur Verriegelung der Notlösevorrichtung in ein Zahnrad (9, 9') eingreift.

7. Federspeicherzylinder nach Anspruch 6, **dadurch gekennzeichnet, dass** der Stift (8) in einer das Zahnrad (9) entriegelnden Position arretierbar ist.

8. Federspeicherzylinder nach Anspruch 6 oder 7, **dadurch gekennzeichnet, dass** die Arretierung des Stiftes (8) in der entriegelten Position über eine Bewegung des Federspeicherkolbens (3) in eine die Bremse lösende Endstellung lösbar ist.

9. Federspeicherzylinder nach einem der Ansprüche 5 bis 8, **dadurch gekennzeichnet, dass** in dem Stift (8) eine Aussparung (32) vorgesehen ist, in die ein Verriegelungselement (30) einfiigbar ist, wenn sich der Stift (8) in der das Zahnrad (9) entriegelnden Position befindet.

10. Federspeicherzylinder nach Anspruch 9, **dadurch gekennzeichnet, dass** der Federspeicherkolben (3) in der die Bremse lösenden Endstellung das Verriegelungselement (30) aus der Aussparung (32) des Stiftes (8) herausgedrückt hält und somit eine Verriegelung des Stiftes (8) mit dem Zahnrad (9) zulässt.

11. Federspeicherzylinder nach einem der Ansprüche 1 bis 10, **dadurch gekennzeichnet, dass** das Kolbenelement (24, 24', 24") in einem Gehäuse (22, 22', 22") abgedichtet geführt ist und beidseitig des Kolbenelementes (24, 24', 24") jeweils ein Anschluss (60, 63; 60', 63') zur Durchleitung eines Fluids vorgesehen ist.

12. Federspeicherzylinder nach einem der Ansprüche 1 bis 11, **dadurch gekennzeichnet, dass** das Kolbenelement (24, 24', 24") mittels einer Feder (27, 27', 27") zu der Seite hin vorgespannt ist, auf der sich der Druckanschluss (6, 6") für den Federspeicherkolben (3, 3 ") befmdet.

13. Federspeicherzylinder nach einem der Ansprüche 1 bis 12, **dadurch gekennzeichnet, dass** das Gehäuse (22) des Kolbenelementes (24) mit dem Gehäuse (2) des Federspeicherzylinders integral ausgebildet ist oder mit diesem verbunden ist.

14. Federspeicherzylinder nach einem der Ansprüche 1 bis 13, **dadurch gekennzeichnet, dass** zur manuellen Entriegelung der Notlösevorrichtung ein Griffelement vorgesehen ist, dass über einen Bowdenzug mit dem Kolbenelement gekoppelt ist.

15. Federspeicherzylinder nach einem der Ansprüche 1 bis 14, **dadurch gekennzeichnet, dass** die Leitung (60) zwischen dem Druckanschluss (6) am Federspeicherzylinder (1) und dem Gehäuse (22), in den das Betätigungsglied (29) geführt ist, durch ein Metallrohr gebildet ist.

16. Federspeicherzylinder nach einem der Ansprüche 1 bis 15, **dadurch gekennzeichnet, dass** zur Schnellbelüftung des Raums (7) in dem Federspeicherzylinder ein nur einseitig dichtender Dichtring an dem Kolbenelement (24) oder ein zusätzliches Ventil vorgesehen ist.

17. Federspeicherzylinder nach einem der Ansprüche 1 bis 16, **dadurch gekennzeichnet, dass** zur Anzeige des Betriebszustandes des Federspeicherzylinders eine Anzeigevorrichtung vorgesehen ist.

18. Federspeicherzylinder nach einem der Ansprüche 1 bis 17, **dadurch gekennzeichnet, dass** der Druckanschluß mit einem Pneumatiksystem verbunden ist.

## Claims

1. Spring storage cylinder for vehicle brakes with a spring storage piston (3, 3") arranged in a housing (2, 2"), in which a piston rod (4, 4") can be displaced in an axial manner, with at least one spring storage spring (5, 5") which pre-tensions the spring storage piston (3, 3"), a chamber (7, 7") connected to a pressure connection (6), which acts on the spring storage piston (3, 3") against the force of the spring storage spring (5, 5"), and an emergency release device (8 to 14; 80; 90) that can be unlocked manually for interrupting the force flow between the spring storage piston (3, 3") and the piston rod (4, 4"), **characterized in that** the emergency release device (8 to 14; 80; 90) that can be unlocked manually can also be released by means of a movable actuating member (24, 24', 24"), with which an exceeding of a certain pressure drop on lines (63) to the pressure connection (6) can be sensed.

2. Spring storage cylinder according to claim 1, **characterized in that** the actuating member (24, 24', 24") is arranged in a flow channel connected to the pressure connection (6).

3. Spring storage cylinder according to claim 1 or 2, **characterized in that** the actuating member (24, 24', 24") comprises a piston element, in which is provided at least one opening (26, 26', 26") for passing a fluid through.

4. Spring storage cylinder according to claim 1 or 2, **characterized in that** the actuating member comprises a piston element that can be moved in a cylinder, and that a flow channel provided with an opening in the shape of a nozzle is provided parallel to the piston element.

5. Spring storage cylinder according to one of claims 1 to 4, **characterized in that** the emergency release device (8 to 14; 80; 90) can be blocked in a first position, in which a force flow between the spring storage piston (3, 3") and the piston rod (4, 4") is produced, and can be blocked in a second position, in which the force flow between the spring storage piston (3, 3") and the piston rod (4, 4") is interrupted.

6. Spring storage cylinder according to one of claims 1 to 5, **characterized in that** the piston element (24) is connected to a pin (8) or a bolt (8') which engages a gearwheel (9, 9') for locking the emergency release device.

7. Spring storage cylinder according to claim 6, **characterized in that** the pin (8) can be blocked in a position that unlocks the gearwheel (9).

8. Spring storage cylinder according to claim 6 or 7, **characterized in that** the blocking of the pin (8) in the in the unlocked position can be released into an end position which releases the brake via a movement of the spring storage piston (3).

9. Spring storage cylinder according to one of claims 5 to 8, **characterized in that** a recess (32) is provided in the pin (8), into which a locking element (30) can be inserted when the pin (8) is in the position that unlocks the gearwheel (9).

10. Spring storage cylinder according to claim 9, **characterized in that** the spring storage piston (3) keeps the locking element (30) pressed out of the recess (32) of the pin (8) in the end position which releases the brake and thus permits a locking of the pin (8) with the gearwheel (9).

11. Spring storage cylinder according to one of claims 1 to 10, **characterized in that** the piston element (24, 24', 24") is guided in a housing (22, 22', 22") in a sealed manner, and that a connection (60, 63, 60', 63') is respectively provided on both sides of the piston element (24, 24', 24") for passing a fluid through.

12. Spring storage cylinder according to one of claims 1 to 11, **characterized in that** the piston element (24, 24', 24") is pre-tensioned by means of a spring (27, 27', 27") to the side where the pressure connection (6, 6") for the spring storage piston (3, 3") is present.

13. Spring storage cylinder according to one of claims 1 to 12, **characterized in that** the housing (22) of the piston element (24) is formed integrally with the housing (2) of the spring storage cylinder or is connected thereto.

14. Spring storage cylinder according to one of claims 1 to 13, **characterized in that** a handle element is provided for the manual release of the emergency release device, which element is coupled to the piston element via a bowden cable.

15. Spring storage cylinder according to one of claims 1 to 14, **characterized in that** the line (60) between the pressure connection (6) at the spring storage cylinder (1) and the housing (22) into which the actuating member (29) is guided, is formed by a metal tube.

16. Spring storage cylinder according to one of claims 1 to 15, **characterized in that** a sealing ring which only seals on one side is provided at the piston element (24), or an additional valve for the fast ventilation of the chamber (7) in the spring storage cylinder.

17. Spring storage cylinder according to one of claims 1 to 16, **characterized in that** a display device is provided for displaying the operating state of the spring storage cylinder.

18. Spring storage cylinder according to one of claims 1 to 17, **characterized in that** the pressure connection is connected to a pneumatic system.

## Revendications

1. Cylindre accumulateur à ressort pour des freins de véhicules, comprenant un piston (3, 3") de l'accumulateur à ressort, dans lequel une tige (4, 4") de piston peut coulisser axialement, comprenant au moins un ressort (5, 5") d'accumulateur à ressort, qui précontraint le piston (3, 3") de l'accumulateur à ressort, un espace (7, 7") communiquant avec un raccord (6) de pression, qui agit sur le piston (3, 3") de l'accumulateur à ressort à l'encontre de la force du ressort (5, 5") de l'accumulateur à ressort, et un dispositif (6 à 14 ; 80 ; 90) de desserrage d'urgence pouvant être déverrouillé manuellement pour interrompre le flux de force entre le piston (3, 3") de l'accumulateur à ressort et la tige (4, 4") de piston, **caractérisé en ce que** le dispositif (8 à 14 ; 80 ; 90) de desserrage d'urgence, pouvant être déverrouillé manuellement, peut être desserré aussi au moyen d'un organe (24, 24', 24") d'actionnement mobile, par lequel un dépassement d'une certaine chute de pression sur des lignes (63) menant au raccord (6) de pression peut être détecté.

2. Cylindre accumulateur à ressort suivant la revendication 1, **caractérisé en ce que** l'organe (24, 24', 24") d'actionnement est disponible dans un canal d'écoulement communiquant avec le raccord (6) de pression.

3. Cylindre accumulateur à ressort suivant la revendication 1 ou 2, **caractérisé en ce que** l'organe (24, 24', 24") d'actionnement comprend un élément de piston, dans lequel est prévu au moins une ouverture (26, 26', 26") pour le passage d'un fluide.

4. Cylindre accumulateur à ressort suivant la revendication 1 ou 2, **caractérisé en ce que** l'organe d'actionnement comprend un élément de piston mobile dans un cylindre, et parallèlement à l'élément de pison est prévu un canal d'écoulement muni d'une ouverture en forme de buse.

5. Cylindre accumulateur à ressort suivant l'une des revendications 1 à 4, **caractérisé en ce que** le dispositif (8 à 14 ; 80 ; 90) de desserrage d'urgence peut être bloqué dans une première position, dans laquelle un flux de force est ménagé entre le piston (3, 3") de l'accumulateur à ressort et la tige (4, 4") du piston, et peut être bloqué dans une deuxième position, dans laquelle le flux de force est interrompu entre le piston (3, 3") de l'accumulateur à ressort et la tige (4, 4") du piston.

6. Cylindre accumulateur à ressort suivant l'une des revendications 1 à 5, **caractérisé en ce que** l'élément (24) de piston est relié à une broche (8) ou à un cliquet (8') d'arrêt, qui, pour le verrouillage du dispositif de desserrage d'urgence, pénètre dans une roue (9, 9') dentée.

7. Cylindre accumulateur à ressort suivant la revendication 6, **caractérisé en ce que** la broche (8) peut être bloquée en une position déverrouillant la roue (9) dentée.

8. Cylindre accumulateur à ressort suivant la revendication 6 ou 7, **caractérisé en ce que** le blocage de la broche (8) en la position déverrouillée peut être débloquée en faisant venir le piston (3) de l'accumulateur à ressort dans une position d'extrémité desserrant le frein.

9. Cylindre accumulateur à ressort suivant l'une des revendications 5 à 8, **caractérisé en ce qu'**il est prévu dans la broche (8) un évidement (32), dans lequel un élément (30) de verrouillage peut être inséré lorsque la broche (8) se trouve dans la position déverrouillant la roue (9) dentée.

10. Cylindre accumulateur à ressort suivant la revendication 9, **caractérisé en ce que** le piston (8) de l'accumulateur à ressort maintient, dans la position d'extrémité desserrant le frein, l'élément (30) de verrouillage repoussé hors de l'évidement (32) de la broche (8) et autorise le verrouillage de la broche (8) avec la roue (9) dentée.

11. Cylindre accumulateur à ressort suivant l'une des revendications 1 à 10, **caractérisé en ce que** l'élément (24, 24', 24") de piston est guidé d'une manière étanche dans une enveloppe (22, 22', 22") et il est prévu du côté de l'élément (24, 24', 24") de piston respectivement un raccord (60, 63 ; 60', 63') de passage d'un fluide.

12. Cylindre accumulateur à ressort suivant l'une des revendications 1 à 11, **caractérisé en ce que** l'élément (24, 24', 24") de piston est mis au moyen d'un ressort (27, 27', 27") sous précontrainte vers le côté où se trouve le raccord (6, 6") de pression pour le piston (3, 3") de l'accumulateur à ressort.

13. Cylindre accumulateur à ressort suivant l'une des revendications 1 à 12, **caractérisé en ce que** l'enveloppe (22) de l'élément (24) à piston est constituée d'un seul tenant avec l'enveloppe (2) du cylindre de l'accumulateur à ressort ou est assemblée à celle-ci.

14. Cylindre accumulateur à ressort suivant l'une des revendications 1 à 13, **caractérisé en ce que,** pour le déverrouillage manuel du dispositif de desserrage d'urgence, il est prévu un élément de préhension, qui est couplé à l'élément de piston par un câble bowden.

15. Cylindre accumulateur à ressort suivant l'une des revendications 1 à 14, **caractérisé en ce que** la ligne (60) entre le raccord (6) de pression sur le cylindre (1) de l'accumulateur à ressort et l'enveloppe (22), dans laquelle est guidé l'organe (29) d'actionnement, est formée par un tube métallique.

16. Cylindre accumulateur à ressort suivant l'une des revendications 1 à 15, **caractérisé en ce que,** pour la mise à l'atmosphère rapide de l'espace (7) dans le cylindre de l'accumulateur à ressort, il est prévu un joint d'étanchéité, ne rendant étanche que d'un côté, sur l'élément (24) du piston ou une vanne supplémentaire.

17. Cylindre accumulateur à ressort suivant l'une des revendications 1 à 16, **caractérisé en ce que,** pour afficher l'état de fonctionnement du cylindre de l'accumulateur à ressort, il est prévu un dispositif d'affichage.

18. Cylindre accumulateur à ressort suivant l'une des revendications 1 à 17, **caractérisé en ce que** le raccord de pression communique avec un système pneumatique.
